# EUROPEAN PATENT APPLICATION

(11) **EP 3 715 992 A2**
(43) Date of publication of application: **30.09.2020**
(21) Application number: 20164984.5
(22) Date of filing: 23.03.2020
(51) Int. Cl.: G05D 1/00, B64C 39/02

(54) **UNMANNED VEHICLE AND UNMANNED VEHICLE CONTROLLING SYSTEM**

(30) Priority: 25.03.2019 US 201916362747
(71) Applicant: PSJ International Ltd., Tortola (VG)
(72) Inventor: WU, Ruey-Beei, 106 Taipei (TW); MAO, Shau-Gang, 106 Taipei (TW)
(74) Representative: dompatent von Kreisler Selting Werner - Partnerschaft von Patent- und Rechtsanwälten mbB

(57) **Abstract**

An unmanned vehicle and an unmanned vehicle controlling system are disclosed. The unmanned vehicle controlling system includes the unmanned vehicle and a controller. The unmanned vehicle includes a body, a first localization module and a second localization module. The first localization module and the second localization module are disposed on the body. The controller is used for sending a localization signal to the first localization module and a second localization module. The unmanned vehicle controls the direction that the body faces and the distance between the unmanned vehicle and the controller.

## Description

### BACKGROUND OF THE INVENTION

### Field of the Invention

The present invention relates to a control system, and specifically to an unmanned vehicle and an unmanned vehicle controlling system applicable to the tracking of a controller.

### Description of the Related Art

Unmanned aerial vehicles (UAVs) are often used to gauge weather and take landscape shots or group photos. Generally speaking, the moving direction of a UAV is controlled by the user so that a better scene, scenery or portraits can be taken. A solution in the prior art is proposed where images are taken for the purpose of controlling the moving direction so as to take the image of a target. However, since controlling the moving direction through images recognition costs a large amount of calculation resources, and thus conventional ways of controlling the moving direction of a UAV does not work efficiently.

### SUMMARY OF THE INVENTION

An objective of the present invention is to provide an unmanned vehicle and an unmanned vehicle controlling system that utilize the localization module disposed on the unmanned vehicle to receive the localization signal sent by a controller, thereby controlling the moving direction and moving distance of the unmanned vehicle through a microcontroller.

An embodiment of the present invention provides an unmanned vehicle controlling system including an unmanned vehicle and a controller. The unmanned vehicle includes a body, a first localization module and a second localization module, in which the first localization module and the second localization module are disposed on the body. The controller is used for sending a localization signal to the first localization module and the second localization module, in which the unmanned vehicle controls the direction that the body faces and the distance between unmanned vehicle and the controller according to the localization signal.

Another embodiment of the present invention provides an unmanned vehicle controlling system having an unmanned vehicle and a controller. The unmanned vehicle includes a body, a first localization module and a second localization module, in which the first localization module and the second localization module are disposed on the body. The controller is used for receiving a first emission signal sent from the first localization module and a second emission signal sent from the second localization module, in which the controller controls the direction that the body faces and the distance between unmanned vehicle and the controller according to the localization information of the first emission signal and the localization information of the second emission signal.

Another embodiment of the present invention provides an unmanned vehicle including a body, a first localization module, and a second localization module. The body includes a plurality of rotors, a rotor controlling module and an image capturing device. The first localization module includes a first antenna disposed on the body. The first localization module is used for sending a first emission signal. The second localization module includes a second antenna disposed on the body. The second localization module is used for sending a second emission signal.

Another embodiment of the present invention provides an unmanned vehicle controlling system including an unmanned vehicle and a controller. The unmanned vehicle includes a body, a first localization module and a second localization module, in which the first localization module and the second localization module are disposed on the body. The controller is used for receiving a first emission signal sent from the first localization module and a second emission signal sent from the second localization module, in which the controller sends a localization information data according to the localization information of the first emission signal and the localization information of the second emission signal, and the unmanned vehicle receives the localization information data and adjusts the direction that the body faces and the distance between unmanned vehicle and the controller according to the localization information data.

Another embodiment of the present invention provides an unmanned vehicle controlling system applicable to the tracking of a controller and the controlling of the moving direction and the moving distance of the unmanned vehicle as stated above. The unmanned vehicle controlling system includes a microcontroller, a plurality of antennae and a plurality of motor controllers. The plurality of antennae includes a first antenna and a second antenna respectively coupled to the microcontroller, in which the first antenna receives a first receiving signal sent from the controller, the second antenna receives a second receiving signal sent from the controller, and the first receiving signal and the second receiving signal each have an identification code different from one another, wherein the microcontroller identifies the first receiving signal and the second receiving signal through the identification code thereof. The plurality of motor controllers includes a first motor controller and a second motor controller respectively coupled to the microcontroller. The microcontroller controls the moving direction and the moving distance of the unmanned vehicle through the first motor controller and the second motor controller according to the first receiving signal and the second receiving signal such that the distance between the unmanned vehicle and the controller is a predetermined distance.

Another embodiment of the present invention provides an unmanned vehicle controlling system applicable to the controlling of the moving direction and the moving distance of the unmanned vehicle as stated above. The unmanned vehicle controlling system includes a microcontroller, a plurality of antennae, a plurality of motor controllers and a controller. The plurality of antennae includes a first antenna and a second antenna respectively coupled to the microcontroller, in which the first antenna receives a first receiving signal sent from the controller, the second antenna receives a second receiving signal sent from the controller, and the first receiving signal and the second receiving signal each have an identification code different from one another, wherein the microcontroller identifies the first receiving signal and the second receiving signal through the identification code thereof. The plurality of motor controllers includes a first motor controller and a second motor controller respectively coupled to the microcontroller. The controller is wirelessly connected to the unmanned vehicle controlling system and includes a user interface. The controller is used for controlling that the distance between the unmanned vehicle and the controller is a predetermined distance. The microcontroller controls the moving direction and the moving distance of the unmanned vehicle through the first motor controller and the second motor controller according to the first receiving signal and the second receiving signal such that the distance between the unmanned vehicle and the controller is a predetermined distance.

Another embodiment of the present invention includes an unmanned vehicle controlling system applicable to the tracking of a controller and the controlling of the moving direction and the moving distance of the unmanned vehicle as stated above. The unmanned vehicle controlling system includes a microcontroller, an antenna, and a plurality of motor controllers. The antenna is coupled to the microcontroller and receiving a localization signal sent from the controller. The plurality of motor controllers includes a first motor controller and a second motor controller respectively coupled to the microcontroller. The microcontroller controls the moving direction and the moving distance of the unmanned vehicle through the first motor controller and the second motor controller according to the localization signal such that the distance between the unmanned vehicle and the controller is a predetermined distance.

With the aforementioned technical solutions, the unmanned vehicle controlling system of the present invention includes the body, the first localization module and the second localization module of the unmanned vehicle, in which the first localization module and the second localization module can be disposed facing different directions such that the controller can receive difference localization signals. The controller then controls the direction that the body faces and the distance between the unmanned vehicle and the controller according to the localization signal sent from the first localization module and that sent from the second localization module, thereby achieving the tracking of the controller performed by the unmanned vehicle with high accuracy.

Furthermore, the present invention utilizes the first antenna and the second antenna to receive the first receiving signal and the second receiving signal respectively. The microcontroller determines whether to use the first motor controller and the second motor controller to change the moving direction and/or the moving distance according to the difference between the first receiving signal and the second receiving signal. In this way, the present invention can effectively reduce the manufacturing costs and enhance the spontaneity of the tracking performed by the unmanned vehicle.

To further learn the features and technical content of the present invention, please refer to the following detailed descriptions and drawings related to the present invention. However, the provided drawings are used only for providing reference and descriptions, and are not intended to limit the present invention.

### BRIEF DESCRIPTION OF THE DRAWINGS

FIG. 1A is a schematic view showing an unmanned vehicle controlling system in operation according to one embodiment of the present invention.
FIG. 1B is a block diagram showing the first localization module according to one embodiment of the present invention.
FIG. 1C is a block diagram showing the second localization module according to one embodiment of the present invention.
FIG. 1D is a schematic view showing an unmanned vehicle controlling system in operation according to one embodiment of the present invention.
FIG. 2A is a schematic view showing the structure of an unmanned vehicle controlling system according to one embodiment of the present invention.
FIG. 2B is a schematic view showing the structure of an unmanned vehicle controlling system according to another embodiment of the present invention.
FIG. 2C illustrates a user interface of the controller according to one embodiment of the present invention.
FIG. 3 is a schematic view showing the structure of an unmanned vehicle controlling system according to another embodiment of the present invention.
FIG. 4 is a schematic view showing an unmanned vehicle controlling system in operation according to another embodiment of the present invention.

### DETAILED DESCRIPTION OF THE PREFERRED EMBODIMENTS

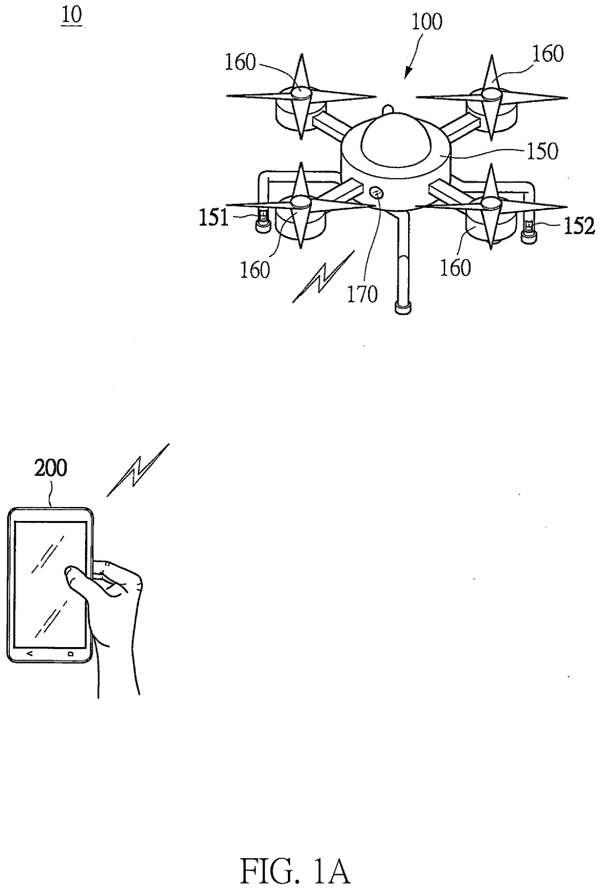

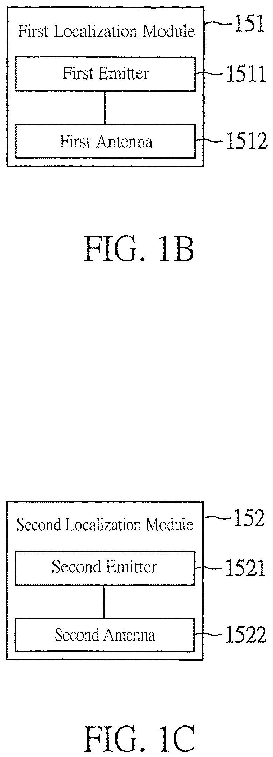

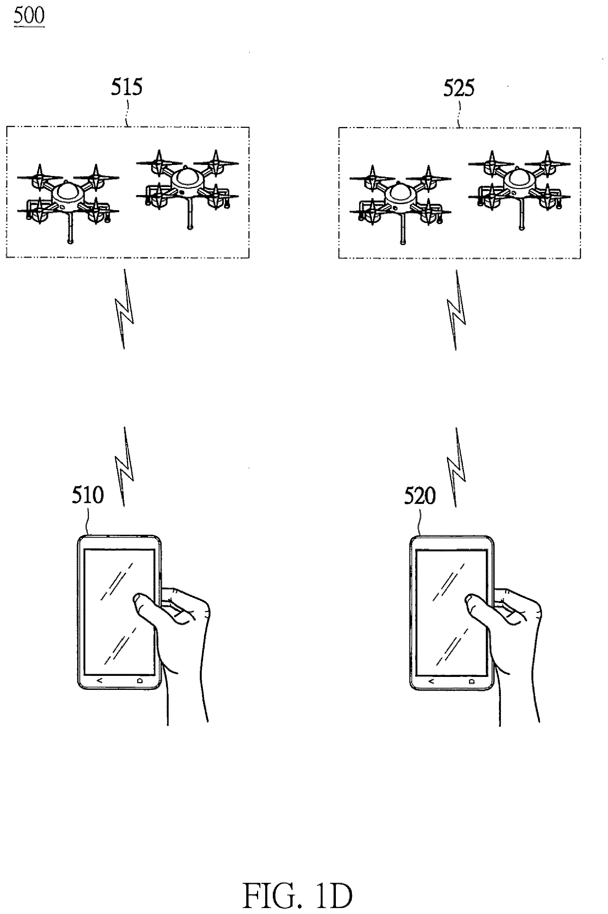

Please refer to FIG. 1A, FIG. 1B, and FIG. 1C, in which FIG. 1A is a schematic view showing an unmanned vehicle controlling system in operation according to one embodiment of the present invention, FIG. 1B is a block diagram showing the first localization module according to one embodiment of the present invention, and FIG. 1C is a block diagram showing the second localization module according to one embodiment of the present invention.

The unmanned vehicle controlling system 10 includes an unmanned vehicle 100 and a controller 200. The unmanned vehicle 100 can be wirelessly controlled in a wireless mode such as Wi-Fi mode or Bluetooth mode. In the present embodiment, the controller 200 is exemplified as a smartphone; however, the present invention is not limited thereto. The unmanned vehicle 100 includes the body 150, the first localization module 151, the second localization module 152, a plurality of rotors 160 and the image capturing device 170. The first localization module 151 includes the first emitter 1511 and the first antenna 1512. The first antenna 1512 is coupled to the first emitter 1511. The second localization module 152 includes the second emitter 1521 and the second antenna 1522. The second antenna 1522 is coupled to the second emitter 1521. It is commonly known that a localization module can emit and receive signals wirelessly, and thus details of the localization modules will not be further described herein.

Specifically, the first localization module 151, the second localization module 152, the rotors 160 and the image capturing device 170 are disposed on the body 150. It should be understood that a signal sent from an antenna typically includes at least one main lobe and at plurality of side lobes, in which the main lobes emit stronger radiation than the side lobes do. In addition, the first emission signal includes a first identification code, and the second emission signal includes a second identification code different from the first identification code. The controller 200 compares the localization information of the first emission signal with that of the second emission signal. The first localization module 151 sends a plurality of first emission signals with a time interval between each successive first emission signal. The second localization module 152 sends a plurality of second emission signals with the time interval of the first localization module 151 between each successive second emission signal. The time interval can be 1 ms, 5 ms, or 10 ms; however, the present invention is not limited thereto.

The main lobe of the first localization module 151 and that of the second localization module 152 can face different directions, but the present invention is not limited thereto. The controller 200 can receive the first emission signal sent from the first localization module 151 of the unmanned vehicle 100, and can receive the second emission signal sent from the second localization module 152 of the unmanned vehicle 100. Furthermore, the controller 200 can determine the intensity of the first emission signal and that of the second emission signal through the information thereof. In other words, the controller 200 controls the direction that the body 150 faces and the distance between the unmanned vehicle 100 and the controller 200 according to the localization information of the first emission signal and that of the second emission signal.

Please refer to FIG. 1A. The direction faced by the image capturing device 170 on the body 150 can be changed in accordance with the change in the direction of the body 150 such that the image capturing device 170 can face the controller 200. Specifically, the unmanned vehicle controlling system 10 of the present invention can automatically track the controller 200, in which the controller 200 can control the direction of the image capturing device 170 according to the localization information of the first emission signal sent by the first localization module 151 and that of the second emission signal sent by the second localization module 152, so that the image capturing device 170 can face the controller 200.

The unmanned vehicle 100 includes a plurality of rotors 160 and a rotor controlling module (not shown in the drawings). The rotor controlling module controls the plurality of rotors 160 in accordance with the control signal sent from the controller 200 such that the moving direction and the moving distance of the body 150 of the unmanned vehicle 100 can be controlled. For example, the controller 200 generates localization information data by comparing the localization information of the first emission signal with that of the second emission signal. Furthermore, the controller 200 sends the localization information data, and the unmanned vehicle 100 receives the localization information data and adjusts the direction that the body 150 faces and the distance between the unmanned vehicle 100 and the controller 200 according to the localization information data.

In one embodiment, the unmanned vehicle controlling system 10 includes the unmanned vehicle 100 and the controller 200. Specifically, the unmanned vehicle 100 includes the body 150, the first localization module 151, and the second localization module 152. The first localization module 151 and the second localization module 152 are disposed on the body 150. The controller 200 is used for sending a localization signal to the first localization module 151 and the second localization module 152, and then the microcontroller (not shown in the drawings) in the unmanned vehicle 100 controls the direction of the body 150 and the distance between the unmanned vehicle 100 and the controller 200. The unmanned vehicle controlling system 10 can adjust the image capturing device 170, so that the image capturing device 170 can face the controller 200, which enables the image capturing device 170 to capture a desired image, e.g. the whole image of a certain target.

Referring to FIG. ID, which illustrates a schematic view showing an unmanned vehicle controlling system in operation according to one embodiment of the present invention, the unmanned vehicle controlling system 500 includes a plurality of unmanned vehicles and a plurality of controllers. The plurality of controllers includes at least a first controller 510 and a second controller 520. The plurality of unmanned vehicles includes at least a first group of unmanned vehicles 515 and a second group of unmanned vehicles 525. Details regarding the unmanned vehicle and the controller can be found in the description of the embodiment shown in FIG. 1A, and therefore will not be further described herein.

The first controller 510 is used for sending a first localization signal to the group of unmanned vehicles 515 and controlling the direction of the body and the distance between the first group of the unmanned vehicles 515 and the first controller 510. In other words, the first controller 510 can control all the unmanned vehicles of the first group of unmanned vehicles 510 at the same time. In the present embodiment, the first controller 510 can control the two unmanned vehicles in the first group of unmanned vehicles 510 at the same time, and in another embodiment, the first controller 510 can control a plurality of unmanned vehicles in the first group of unmanned vehicles 515 at the same time. The second controller 520 is used for sending a second localization signal and controlling the direction of the body and the distance between the second group of unmanned vehicles 525 and the second controller 520. It should be noted that the number of the unmanned vehicles and the controllers in the present invention has no specific limitations.

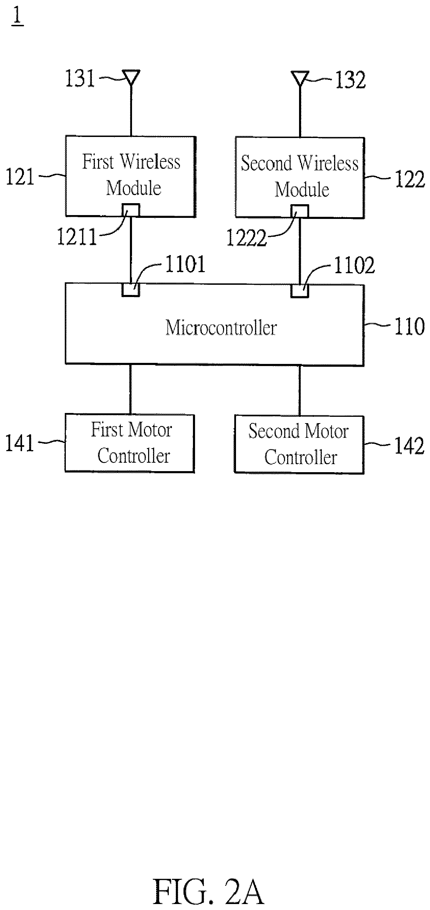

Please refer to FIG. 2A, which is a schematic view showing the structure of an unmanned vehicle controlling system according to one embodiment of the present invention. The present embodiment provides an unmanned vehicle controlling system 1 applicable to the tracking of a controller (not shown in the drawings) and the controlling of the moving direction and the moving distance of the unmanned vehicle (not shown in the drawings). Furthermore, the unmanned vehicle controlling system 1 can track the direction and moving distance of the controller.

Referring to FIG. 2A, the unmanned vehicle controlling system 1 includes the microcontroller 110, the first wireless module 121, the second wireless module 122, the first antenna 131, the second antenna 132, the first motor controller 141, and the first motor controller 141. The microcontroller 110 further includes the third serial peripheral interface 1101 and the fourth serial peripheral interface 1102. The first wireless module 121 includes the first serial peripheral interface 1211, and the second wireless module 122 includes the second serial peripheral interface 1222.

The microcontroller (MCU) 110 can include software, firmware and hardware that enable the microcontroller 110 to complete proper calculation so as to control the moving direction and moving distance of the unmanned vehicle. For instance, when the unmanned vehicle is too far away from the user taking hold of the controller, the microcontroller 110 controls the unmanned vehicle to move towards the user. On the contrary, when the unmanned vehicle is too close to the user taking hold of the controller, the microcontroller 110 controls the unmanned vehicle to move away from the user.

In the present embodiment, the unmanned vehicle controlling system 1 includes a plurality of antennae. Specifically, in this embodiment, the unmanned vehicle controlling system 1 includes a first antenna 131 and a second antenna 132. The first antenna 131 sends a first emission signal to the controller, which calculates the first receiving signal according to the first emission signal. The second antenna 132 sends a second emission signal to the controller, which calculates the second receiving signal according to the second emission signal. The microcontroller 110 controls the moving direction and the moving distance of the unmanned vehicle according to the difference between the first receiving signal and the second receiving signal. For example, if the information of the second emission signal sent by the second antenna 132 is sequenced prior to the information of the first emission signal sent by the first antenna 131, the controller determines by calculation that the signal intensity of the second receiving signal is stronger than that of the first receiving signal.

To be specific, an antenna can be designed to emit and receive electromagnetic waves in one or more particular directions, along which the main lobes have stronger field strength, but not limited thereof. The antenna emits and receives weaker electromagnetic waves in other directions, where the side lobes reside. If a circular polarization antenna is used, polarization mismatch may occur when the controller is moved. Therefore, in the present embodiment, the first emission signal sent by the first antenna 131 and the second emission signal sent by the second antenna 132 can avoid polarization mismatch during the displacement of the controller.

The first antenna 131 and the second antenna 132 are coupled to the microcontroller 110 through the first wireless module 121 and the second wireless module 122 respectively. The first antenna 131 receives the first receiving signal sent from the controller, and the second antenna 132 receives the second receiving signal sent form the controller, wherein the first receiving signal and the second receiving signal each have an identification code different from one another. The microcontroller 110 identifies the first receiving signal and second receiving signal through the identification codes thereof.

In the present embodiment, the unmanned vehicle controlling system 1 includes a plurality of motor controllers. Specifically, the unmanned vehicle controlling system 1 includes the first motor controller 141 and the second motor controller 142 respectively coupled to the microcontroller 110. Furthermore, the first motor controller 141 is used for controlling the moving direction of the unmanned vehicle, and the second motor controller 142 is used for controlling the moving distance of the unmanned vehicle. The microcontroller 110 controls the unmanned vehicle to rotate and change the moving direction thereof, or control the unmanned vehicle to fly close to or away from the controller through the first motor controller 141 and the second motor controller 142.

Specifically, when the microcontroller 110 determines that the localization information of the first receiving signal is not equal to that of the second receiving signal, it may be the case that the information transmitted between the first antenna 131 and the controller is different from that transmitted between the second antenna 132 and the controller. Accordingly, the microcontroller 110 controls the first motor controller 141 to rotate the moving direction of the unmanned vehicle in a manner such that the localization information of the first receiving signal is essentially equal to that of the second receiving signal.

On the other hand, when the microcontroller 110 determines that the localization information of the first receiving signal and that of the second receiving signal are identical and both smaller than a first distance-localization signal intensity, the microcontroller 110 controls the second motor controller 142 such that the unmanned vehicle can move a moving distance towards the controller until the distance therebetween is equal to a predetermined distance. When the microcontroller 110 determines that the localization information of the first receiving signal and that of the second receiving signal are identical and both larger than a second distance-localization signal intensity, the microcontroller 110 controls the second motor controller 142 such that the unmanned vehicle can move a moving distance away from the controller until the distance therebetween is equal to the predetermined distance. Specifically, the second distance-localization signal intensity is larger than the first distance-localization signal intensity. For instance, when the microcontroller 110 determines that the unmanned vehicle is too far away from the controller, the microcontroller 110 controls the second motor controller 142 such that the unmanned vehicle can move towards the controller until the distance therebetween is the predetermined distance. On the other hand, when the microcontroller 110 determines that the unmanned vehicle is too close to the controller, the microcontroller 110 controls the second motor controller 142 such that the unmanned vehicle can move away from the controller until the distance therebetween is the predetermined distance.

In the present embodiment, the unmanned vehicle controlling system 1 includes a plurality of wireless modules. Specifically, the unmanned vehicle controlling system 1 includes the first wireless module 121 and the second wireless module 122. The first wireless module 121 includes the first serial peripheral interface (SPI) 1211, and the second wireless module 122 includes the second serial peripheral interface 1222. The first serial peripheral interface 1211 of the first wireless module 121 is coupled between the first antenna 131 and the third serial peripheral interface 1101 of the microcontroller 110. The second serial peripheral interface 1222 of the microcontroller 110 is coupled between the second antenna 132 and the fourth serial peripheral interface 1102 of the microcontroller 110. Both the first wireless module 121 and the second wireless module 122 include storage circuits. The first wireless module 121 receives the first receiving signal from the first antenna 131, and the second wireless module 122 receives the second receiving signal from the second antenna 132. In one embodiment, a switch (not shown in the drawings) is provided between the first wireless module 121 and the first antenna 131 and between the second wireless module 122 and the second antenna 132 such that the first antenna 131 can be coupled to the second wireless module 122, and the second antenna 132 can be coupled to the first wireless module 121.

It can be derived from the above that the microcontroller 110 controls the moving direction and the moving distance of the unmanned vehicle through the first motor controller 141 and the second motor controller 142 according to the first receiving signal and the second receiving signal in a manner such that the distance between the unmanned vehicle and the controller held by the user is equal to the predetermined distance.

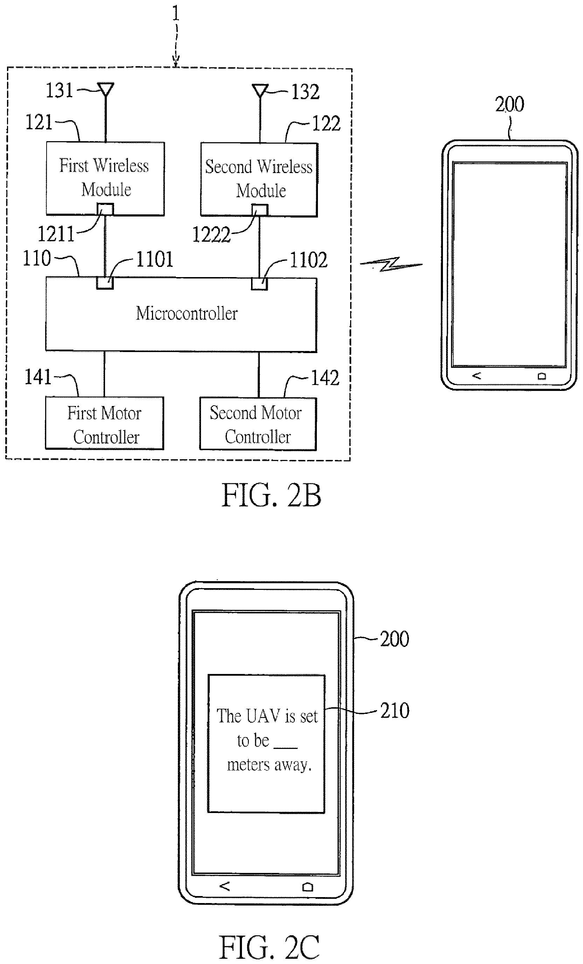

Please refer to FIG. 2B and FIG. 2C, in which FIG. 2B is a schematic view showing the structure of an unmanned vehicle controlling system according to another embodiment of the present invention, and FIG. 2C illustrates a user interface of the controller according to one embodiment of the present invention. FIG. 2B shows the unmanned vehicle controlling system 1 and the controller 200. For details about the unmanned vehicle controlling system 1, one can refer to the description of the embodiment shown in FIG. 2A, and therefore the details about the unmanned vehicle controlling system 1 will not be further described herein. The controller 200 can be wirelessly connected to the unmanned vehicle controlling system 1 in a wireless mode such as Bluetooth mode or Wi-Fi mode. The controller 200 includes a user interface 210 for receiving commands specifying the distance between the unmanned vehicle and the controller 200.

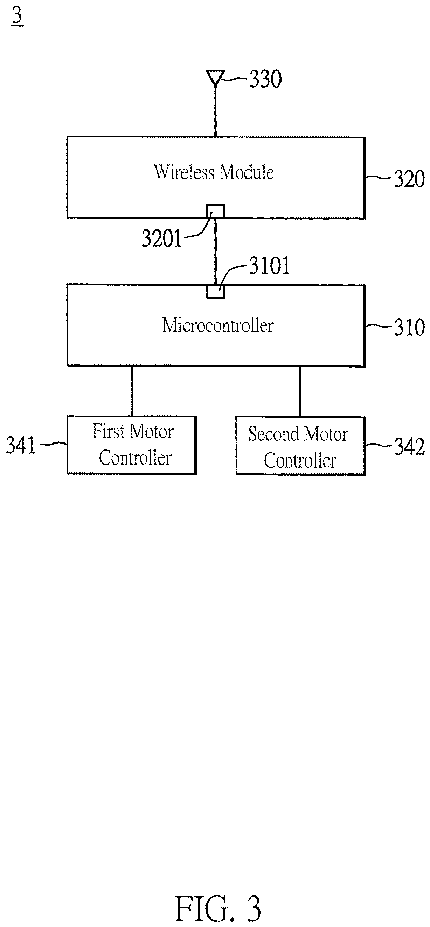

Referring to FIG. 3, which is a schematic view showing the structure of an unmanned vehicle controlling system according to another embodiment of the present invention, the unmanned vehicle controlling system 3 includes the microcontroller 310, the wireless module 320, the antenna 330, the first motor controller 341, and the second motor controller 342. The microcontroller 310 includes the serial peripheral interface 3101. The wireless module 320 includes the serial peripheral interface 3201. The serial peripheral interface 3101 of the microcontroller 310 is coupled to the serial peripheral interface 3201 of the wireless module 320. The antenna 330 is coupled to the microcontroller 310 via the wireless module 320 and receives the receiving signal sent from the controller. In the present embodiment, the unmanned vehicle controlling system 3 includes a plurality of motor controllers. Specifically, the unmanned vehicle controlling system 3 includes at least the first motor controller 341 and the second motor controller 342 respectively coupled to the microcontroller 310.

Furthermore, the first motor controller 341 is used for controlling the moving direction of the unmanned vehicle, and the second motor controller 342 is used for controlling the moving distance of the unmanned vehicle. When the microcontroller 310 determines that the intensity of the localization signal is smaller than the direction-localization signal intensity, which indicates that the main lobe received by the controller is shifted in a significant manner, the microcontroller 310 controls the first motor controller 341 to rotate the unmanned vehicle such that the moving direction thereof is changed. When the microcontroller 310 determines that the intensity of the localization signal is smaller than the distance-localization signal intensity, the microcontroller 310 controls the second motor controller 342 such that the unmanned vehicle can move towards the controller until the distance therebetween is the predetermined distance. When the microcontroller 310 determines that the intensity of the localization signal is larger than the distance-localization signal intensity, the microcontroller 310 controls the second motor controller 342 such that the unmanned vehicle can move away from the controller until the distance therebetween is the predetermined distance. The microcontroller 310 controls the moving direction and the moving distance of the unmanned vehicle through the first motor controller 341 and the second motor controller 342 according to the localization signal such that the distance between the unmanned vehicle and the controller held by the user is the predetermined distance.

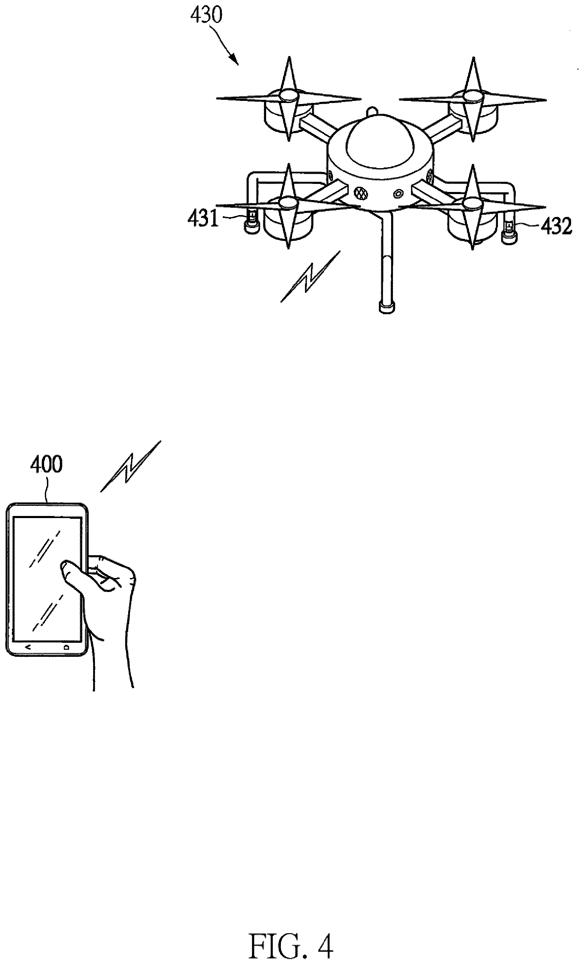

Please refer to FIG. 4, which is a schematic view showing an unmanned vehicle controlling system in operation according to another embodiment of the present invention. The unmanned vehicle 430 includes the first antenna 431 and the second antenna 432. The controller 400 can calculate the first receiving signal and the second receiving signal according to the first emission signal sent from the first antenna 431 and the second emission signal sent from the second antenna 432. The microcontroller (not shown in the drawings) of the unmanned vehicle 430 can control the moving direction and the moving distance of the unmanned vehicle 430 according to the difference between the first receiving signal and the second receiving signal.

In summary, the unmanned vehicle and the unmanned vehicle controlling system provided by the present invention include the body, the first localization module and the second localization module of the unmanned vehicle, in which the first localization module and the second localization module can be disposed facing different directions such that the controller receives different localization signals. The controller then controls the direction that the body faces and the distance between the unmanned vehicle and the controller according to localization signal sent from the first localization module and that sent from the second localization module, thereby achieving accurate tracking of the controller performed by the unmanned vehicle.

Furthermore, the present invention utilizes the first antenna and the second antenna to receive the first receiving signal and the second receiving signal respectively, in which the microcontroller determines the difference between the first receiving signal and the second receiving signal to decide whether to change the moving direction and the moving distance of the unmanned vehicle through the first motor controller and the second motor controller. In addition, the first receiving signal and the second receiving signal each have an identification code different from each other, so that the microcontroller can distinguish the first receiving signal from the second receiving signal, thereby enhancing the communication between the first antenna, the second antenna and the controller. The present invention controls the unmanned vehicle to track the controller held by a user by calculating the intensity difference between the localization signals, so that the distance between the unmanned vehicle and the controller is essentially equal to a predetermined distance, thereby effectively enhancing the spontaneity of the tacking and lowering the manufacturing costs. In addition, the first emission signal sent by the first antenna and the second emission signal sent by the second antenna can avoid polarization mismatch which may occur when the controller is moved.

The present invention has been described with reference to the above embodiments, but the above embodiments are merely examples for implementing the present invention. It should be noted that the disclosed embodiments are not intended to limit the scope of the present invention. On the contrary, any modification and equivalent configuration within the spirit and scope of the appended claims shall fall within the scope of the present invention.

## Claims

1. An unmanned vehicle controlling system, **characterized in that** the unmanned vehicle controlling system comprises:
an unmanned vehicle having a body, a first localization module and a second localization module, in which the first localization module and the second localization module are disposed on the body; and
a controller for sending a localization signal to the first localization module and the second localization module, in which the unmanned vehicle controls the direction that the body faces and the distance between unmanned vehicle and the controller according to the localization signal.

2. The unmanned vehicle controlling system of claim 1, **characterized in that** the controller comprises a first controller and a second controller, the unmanned vehicle further comprises:
a first group of unmanned vehicles having a plurality of the unmanned vehicles; and
a second group of unmanned vehicles having a plurality of the unmanned vehicles,
wherein the first controller is used for sending a first localization signal and controlling the direction that the first group of unmanned vehicles face and the distance between the first group of unmanned vehicles and the first controller,
wherein the second controller is used for sending a second localization signal and controlling the direction that the second group of unmanned vehicles face and the distance between the second group of unmanned vehicles and the second controller.

3. An unmanned vehicle controlling system, **characterized in that** the unmanned vehicle controlling system comprises:
an unmanned vehicle having a body, a first localization module and a second localization module, the first localization module and the second localization module being disposed on the body; and
a controller for receiving a first emission signal sent from the first localization module and a second emission signal sent from the second localization module, the controller controlling the direction that the body faces and the distance between unmanned vehicle and the controller according to the localization information of the first emission signal and the localization information of the second emission signal.

4. The unmanned vehicle controlling system of claim 3, **characterized in that** the first localization module comprises a first emitter and a first antenna coupled to the first emitter; the second localization module comprises a second emitter and a second antenna coupled to the second emitter; the first emission signal comprises a first identification code, and the second emission signal comprises a second identification code different from the first identification code; the first localization module sends a plurality of the first emission signals with a time interval between each successive first emission signal.

5. The unmanned vehicle controlling system of claim 3, **characterized in that** the unmanned vehicle further comprises an image capturing device disposed on the body, in which the direction faced by the image capturing device is changed in accordance with the change in the direction of the body such that the image capturing device faces the controller; the unmanned vehicle comprises a plurality of rotors and a rotor controlling module, the rotor controlling module controlling the plurality of rotors according to a control signal sent from the controller, in which the controller generates the control signal by comparing the localization information of the first emission signal and the localization information of the second emission signal.

6. An unmanned vehicle, **characterized in that** the unmanned vehicle comprises:
a body comprising a plurality of rotors, a rotor controlling module and an image capturing device;
a first localization module having a first antenna disposed on the body, the first localization module being used for sending a first emission signal; and
a second localization module having a second antenna disposed on the body, the second localization module being used for sending a second emission signal.

7. The unmanned vehicle of claim 6, **characterized in that** the first localization module comprises a first emitter coupled to the first antenna, the first emitter emits the first emission signal comprising a first identification code, which are sent by the first antenna with a time interval between each successive said signal, and wherein the second localization module comprises a second emitter coupled to the second antenna, the second emitter emits the second emission signal comprising a second identification code, which are sent by the second antenna with the time interval between each successive said signal.

8. An unmanned vehicle controlling system, **characterized in that** the unmanned vehicle controlling system comprises:
an unmanned vehicle having a body, a first localization module and a second localization module, the first localization module and the second localization module being disposed on the body; and
a controller for receiving a first emission signal sent from the first localization module and a second emission signal sent from the second localization module, in which the controller sends a localization information data according to the localization information of the first emission signal and the localization information of the second emission signal, and the unmanned vehicle receives the localization information data and adjusts the direction that the body faces and the distance between unmanned vehicle and the controller according to the localization information data.

9. An unmanned vehicle controlling system, **characterized in that** the unmanned vehicle controlling system is applicable to the tracking of a controller and the controlling of the moving direction and the moving distance of the unmanned vehicle of claim 7, the unmanned vehicle controlling system comprises:
a microcontroller;
a plurality of antennae comprising a first antenna and a second antenna respectively coupled to the microcontroller, in which the first antenna receives a first receiving signal sent from the controller, the second antenna receives a second receiving signal sent from the controller, and the first receiving signal and the second receiving signal each have an identification code different from one another, wherein the microcontroller identifies the first receiving signal and the second receiving signal through the identification code thereof; and
a plurality of motor controllers comprising a first motor controller and a second motor controller respectively coupled to the microcontroller,
wherein the microcontroller controls the moving direction and the moving distance of the unmanned vehicle through the first motor controller and the second motor controller according to the first receiving signal and the second receiving signal such that the distance between the unmanned vehicle and the controller is a predetermined distance.

10. An unmanned vehicle controlling system, **characterized in that** the unmanned vehicle controlling system is applicable to the controlling of the moving direction and the moving distance of the unmanned vehicle of claim 6, the unmanned vehicle controlling system comprises:
a microcontroller;
a plurality of antennae, comprising a first antenna and a second antenna respectively coupled to the microcontroller, in which the first antenna receives a first receiving signal sent from the controller, the second antenna receives a second receiving signal sent from the controller, and the first receiving signal and the second receiving signal each have an identification code different from one another, wherein the microcontroller identifies the first receiving signal and the second receiving signal through the identification codes thereof;
a plurality of motor controllers comprising a first motor controller and a second motor controller respectively coupled to the microcontroller; and
a controller wirelessly connected to the unmanned vehicle controlling system and having a user interface, the controller being used for controlling that the distance between the unmanned vehicle and the controller is a predetermined distance,
wherein the microcontroller controls the moving direction and the moving distance of the unmanned vehicle through the first motor controller and the second motor controller according to the first receiving signal and the second receiving signal such that the distance between the unmanned vehicle and the controller is a predetermined distance.

11. The unmanned vehicle controlling system of claim 9 or claim 10, **characterized in that** the first motor controller is used for controlling the moving direction of the unmanned vehicle, and the second motor controller is used for controlling the moving distance of the unmanned vehicle, wherein when the microcontroller determines that the first receiving signal is not equal to the second receiving signal, the microcontroller controls the first motor controller to change the moving direction of the unmanned vehicle, wherein when the microcontroller determines that the first receiving signal and the second receiving signal are identical and both smaller than a first distance-localization signal intensity, the microcontroller controls the second motor controller such that the unmanned vehicle moves a moving distance towards the controller until the distance therebetween is the predetermined distance; wherein when the microcontroller determines that the first receiving signal and the second receiving signal are identical and both larger than a second distance-localization signal intensity, the microcontroller controls the second motor controller such that the unmanned vehicle moves a moving distance away from the controller until the distance therebetween is the predetermined distance.

12. The unmanned vehicle controlling system of claim 9 or claim 10, **characterized in that** the unmanned vehicle controlling system further comprises:
a plurality of wireless module comprising a first wireless module having a first serial connection interface and a second wireless module having a second serial connection interface, the first serial connection interface of the first wireless module being coupled between the first antenna and a third serial connection interface of the microcontroller, the second serial connection interface of the second wireless module being coupled between the second antenna a fourth serial connection interface of the microcontroller, wherein the first wireless module receives the first receiving signal through the first antenna and stores the first receiving signal, and wherein the second wireless module receives the second receiving signal through the second antenna and stores the second receiving signal.

13. The unmanned vehicle controlling system of claim 9 or claim 10, **characterized in that** the first antenna sends a first emission signal to the controller, and the controller calculates the first receiving signal according to the first emission signal, wherein the second antenna sends a second emission signal to the controller, and the controller calculates the second receiving signal according to the second emission signal, and wherein the microcontroller controls the moving direction and the moving distance of the unmanned vehicle in accordance with the difference between the first receiving signal and the second receiving signal.

14. An unmanned vehicle controlling system, **characterized in that** the unmanned vehicle controlling system is applicable to the tracking of a controller and the controlling of the moving direction and the moving distance of the unmanned vehicle of claim 6, the unmanned vehicle controlling system comprises:
a microcontroller;
an antenna coupled to the microcontroller and receiving a localization signal sent from the controller; and
a plurality of motor controllers comprising a first motor controller and a second motor controller respectively coupled to the microcontroller,
wherein the microcontroller controls the moving direction and the moving distance of the unmanned vehicle through the first motor controller and the second motor controller according to the localization signal such that the distance between the unmanned vehicle and the controller is a predetermined distance.

15. The unmanned vehicle controlling system of claim 14, **characterized in that** the first motor controller is used for controlling the moving direction of the unmanned vehicle, and the second motor controller is used for controlling the moving distance of the unmanned vehicle, wherein when the microcontroller determines that the localization signal is smaller than a directional-localization signal intensity, the microcontroller controls the first motor controller to change the moving direction of the unmanned vehicle, wherein when the microcontroller determines that the localization signal is smaller than a distance-localization signal intensity, the microcontroller controls the second motor controller such that the unmanned vehicle moves a moving distance towards the controller until the distance therebetween is the predetermined distance, and wherein when the microcontroller determines that the localization signal is larger than the distance-localization signal intensity, the microcontroller controls the second motor controller such that the unmanned vehicle moves a moving distance away from the controller until the distance therebetween is the predetermined distance.
